# EUROPEAN PATENT SPECIFICATION

(11) **EP 2 737 221 B1**
(45) Date of publication and mention of the grant of the patent: **07.12.2016**
(21) Application number: 12817648.4
(22) Date of filing: 26.07.2012
(51) Int. Cl.: F16B 31/02

(54) **TAMPER PROOF FASTENING MECHANISM AND FASTENER**
MANIPULATIONSGESCHÜTZTER BEFESTIGUNGSMECHANISMUS UND BEFESTIGUNGSELEMENT
MÉCANISME DE FIXATION INVIOLABLE ET ORGANE DE FIXATION

(30) Priority: 27.07.2011 US 201161574054 P
(43) Date of publication of application: 04.06.2014
(73) Proprietor: Safecar Theft Prevention Systems Ltd., Petach Tikva 4951337 (IL)
(72) Inventor: RONEN, Zissu, 49380 Petach Tikva (IL)
(74) Representative: Sarpi, Maurizio
(86) International application number: PCT/IL2012/050276
(87) International publication number: WO 2013/014675

(56) References cited:
- FR-A- 1 007 922
- GB-A- 1 446 437
- US-A- 2 760 399
- US-A- 4 010 788
- US-A- 4 411 570
- US-A- 5 120 168
- US-A- 5 120 168
- US-A1- 2004 022 596
- US-A1- 2011 170 983
- US-A1- 2012 038 145
- US-B1- 7 014 403

## Description

### FIELD OF THE INVENTION

The present invention generally relates to fastening mechanisms for fastening elements in permanent fixing such as shear bolts.

### BACKGROUND OF THE INVENTION

Shear bolts and shear pins are often used for permanent connecting of elements such as plates to one another in a non-removable manner. The shear bolt often includes a cylindrical often threaded pin portion configured for being inserted into a designated socket perforated between the elements held for being connected and a removable head portion configured for being used for inserting (e.g. screwing) the pin portion into the socket using a designated tool such as a screwdriver and then being removed therefrom (sheared) for preventing removing of the pin portion from the socket, thereby providing tamper proof fastening of the elements. The sear bolt head portion is commonly designed as a drive bolt head for allowing a corresponding screwdriver to be used for fastening the shear bolt for securing the designated elements to one another. The drive bolt head is designed to be sheared either by forcefully removing thereof or by unscrewing thereof from the pin portion.

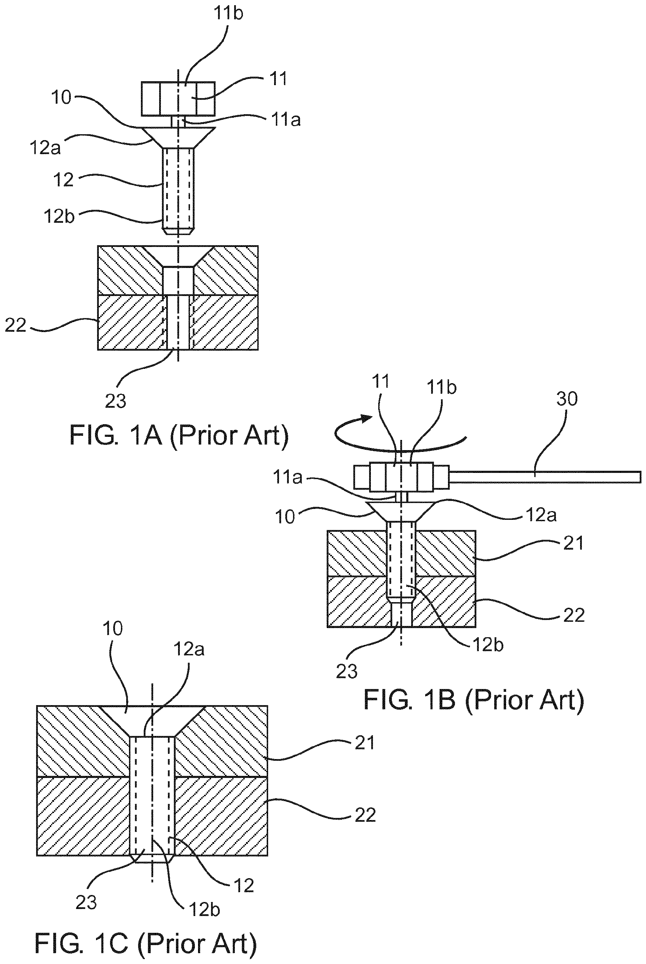

**Figures 1A-1C** show a known in the art shear bolt **10** having a removable bolt head **11** (also known as drive flange) and pin portion **12** fastening two plate elements **21** and **22** to one another. The bolt head **11** is used for securing the pin portion **12,** which includes a screw-thread thereover, into a designated threaded socket **23** perforated through the two plate elements **21** and **22** by using a suitable tool **30** (e.g. a wrench). Once the pin portion **12** is inside the socket **23,** the bolt head **11** is sheared for preventing the pin portion **12** from being removed of the socket **23.** To allow easy removal of the bolt head **11** the pin portion **12** often includes a widening part **12a** and a pin part **12b,** which may be threaded, where the widening part **12a** has a funnel shape having a polygonal socket for receiving a corresponding polygonal connecting bit **11a** of the bolt head **11.** The bolt head **11** includes the polygonal connecting bit **11a** as well as a head portion **11b**, in this case having a polygonal design for enabling a corresponding polygonal wrench **30** to be used for securing the shear bolt **10** to the socket **23** by rotating thereof to a predefine rotation direction. Once the pin portion **12** is threaded into the designated threaded socket **23** of the elements **21** and **22,** the interlocking of the polygonal connecting bit **11a** of the bolt head **11** is easily pulled out from the corresponding polygonal socket **12c** of the pin portion **12.** The socket **23** between the plate elements **21** and **22** can include a narrower portion **23a** and a wider portion **23b** for allowing the edge of the pin portion **12** to better fit therein.

This shear bolt **10** only provides partial protection from disconnection of the elements **21** and **22** as the elements **21** and **22** can be disassembled by using special tools such as a saw, drill or mill tools. A toll having a corresponding polygonal protrusion can be used for interlocking with the remaining polygonal socket **12c** of the pin portion **12,** for example, and then rotated for removing the pin portion **12** from the socket **23** of the elements **21** and **22.**

FR1007922 teaches a safety closure for preventing the nuts from being loosened by unauthorized hands by unauthorized persons in which different closures are preferably distinguished from each other by small differences in construction. We can achieve this by .Example, you varying diameter or length of the key or throat, adopting no different screw (threaded or tapping left or right), so that by varying the diameter of not quote or the number of the rod nets <B> 12 </ B> or giving different dimensions to the socket 15.

GB1446437 teaches a socket spanners hand tool to turn a tamper-resistant screw the head of which has a plan form with outwardly convex sides which intersect at positions lying at the corners of a polygon, e.g. a rectangle or a pentagon, the sides curving inwardly towards the axis of the shank as they extend away from the shank to form a generally domed head with a smooth continuous surface, has a socket complementary in shape to the screw head, and has a slight clearance fit on the head.

US4010788 teaches a bolt seal for securing hasps on trailer truck doors and/or rail car doors which utilizes a round or oval head bolt which extends through the hasps and upon which a nut is threaded. The nut is threaded onto the bolt until it is tight and then a hollow tube is used to bend the bolt sharply to about 90 DEG just under the nut. Identification number areas are formed at the tail of the bolt and on a flat portion of the bolt adjacent the head. If a thief tries to break the seal by bending the bolt back to its original straight condition, the metallurgy of the bolt is selected so that the bolt breaks off. This indicates that the seal has been tampered with and furthermore, the thief finds that if he tries to turn the nut the round head of the bolt will rotate and since the threads are upset by the bending he will be unable to remove the nut. A modification of the invention utilizes a spin nut which is cylindrical in shape.

US2011/170983 teaches a ratcheting fastener assembly for securing to an object. The screw preferably has right-hand threads so that the tightening rotational direction of the screw 98 is clockwise about the screw axis when viewing the screw 98 from the rear (i.e., viewing the screw along the forward direction).

US2012/038145 teaches a flange lock reduces the likelihood of theft of equipment connected by one or more flanges. In order to disassemble the flange lock one needs the specialty wrench and needs to know which direction the threads extend, i.e. are they left handed or right handed threads.

### SUMMARY OF INVENTION

According to the present invention, there is provided a safety mechanism comprising: at least two elements having a plurality of sockets perforated thereover, each of the sockets is perforated through the at least two elements for receiving a fastener portion therein for connecting the elements to one another; a plurality of fasteners each having a threaded portion and a head portion that allows using a rotating tool for fastening the fastener by rotating thereof to a predefined direction and removing thereof by rotating it to an opposite rotating direction, the plurality of fasteners comprise at least one fastener of a first type and at least one fastener of a second type. The first type fastener is configured to fasten the elements by rotating it to a first rotation direction and removing thereof by rotating it to a second rotating direction opposite to the first rotation direction, wherein the second type fastener is configured to fasten the elements by rotating it to the second rotation direction and removing thereof by rotating it to the first rotating direction opposite thereto. Each of the plurality of fasteners regardless of its particular type is designed to appear the same from at least one side thereof that is configured for being exposed to a viewer once the respective fastener is secured to the elements for preventing a respective viewer from visually distinguishing the type and therefore the rotation direction of each respective fastener.

Optionally, each the fastener is a shear bolt having a pin portion and a head portion connected to the pin portion, the head portion is configured for allowing the fastening mechanism to connect said at least two elements to one another by using a designated fastening tool and for being sheared off from the pin portion once the pin portion is inserted to a respective socket perforated through the at least two elements for connecting thereof.

Additionally or alternatively, the plurality of elements form a casing for at least one vital component of a vehicle when fastened to one another using the plurality of fasteners, encasing the at least one vital component therein.

According to yet another aspect of the invention, there is provided a safety mechanism comprising: at least two elements having at least one socket perforated therethrough; and at least one shear bolt for fastening the elements to one another.The shear bolt comprises: a pin portion comprising a bottom threaded portion; and a head portion connected to the pin portion, the head portion is configured for allowing the fastening mechanism to connect the at least two elements to one another by using a designated fastening tool and for being sheared off from the pin portion once the pin portion is inserted to a socket perforated through the at least two elements for connecting thereof, wherein the socket comprises a longitudinal section and a widening bottom section , wherein once rotating the pin portion further into the socket, the threaded portion of the pin portion reaches the widening edge section, which is not threaded and therefore the pin portion is unable to be unscrewed therefrom.

### BRIEF DESCRIPTION OF DRAWINGS

**Fig. 1A** shows a prior art hexagonal shear bolt used for connecting two elements before the bolt head is removed.
**Fig. 1B** shows the prior art shear bolt used for connecting two elements after the bolt has been inserted through the elements and while the bolt head is sheared by using a hexagonal screwdriver.
**Fig. 1C** shows the shear bolt of the prior art fastening the two elements after the head has been sheared off.
**Figures 2A, 2B** and **2C** schematically illustrate a shear bolt fastener rotatable to one direction, according to a first embodiment of the present invention, where **Fig. 2A** is a side view of the shear bolt; **Fig. 2B** is a bottom view of the shear bolt; and **Fig. 2C** is an elevated view of the shear bolt.
**Figures 3A, 3B** and **3C** schematically illustrate another shear bolt fastener rotatable to an opposite direction to that of the bolt illustrated in **Fig. 2B****, ,** where **Fig. 3A** is a side view of the shear bolt; **Fig. 3B** is a bottom view of the shear bolt; and **Fig. 3C** is an elevated view of the shear bolt.

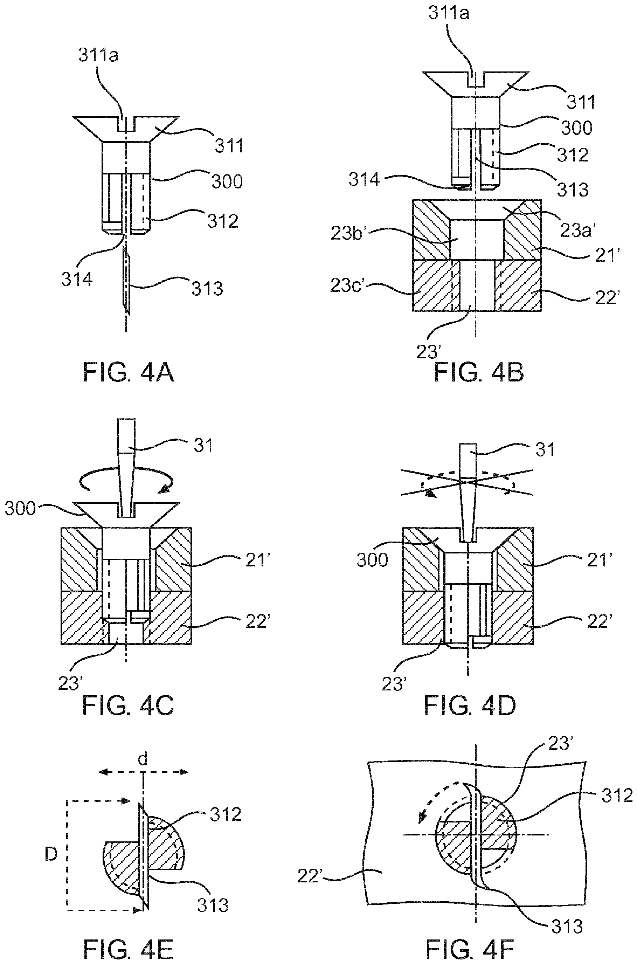

**Figures 4A, 4B, 4C, 4D, 4E** and **4F** schematically illustrate a fastener having a hard plate connected thereto for permanent fixing by rotation prevention of the fastener once inside the socket, according to another embodiment of the present invention, where **Fig. 4A** is an exploded side view of the fastener; **Fig. 4B** shows the fastener and socket thereof for connecting two elements, where the fastener is out of the socket; **Fig. 4C** shows the fastener half way through the socket; **Fig. 4D** shows the fastener fully inside the socket; **Fig. 4E** shows a cross section of a pin portion of the fastener showing how before inserted into the socket the hard plate is straight allowing rotation thereof; and **Fig. 4F** shows a cross section of the pin portion of the fastener showing how after inserted into the socket the hard plate is deformed thereby preventing rotation thereof.
**Fig. 5** shows a shear bolt permanent fix fastener having a widening lower edge, according to another embodiment of the invention.
**Fig. 6** shows a shear bolt permanent fix fastener having a lower edge covered with adhesive material, according to yet another embodiment of the invention.
**Fig. 7A** shows a permanent fix shear bolt fastener having a pin portion with a threaded widening bottom part for allowing permanent fixing thereof, according to other embodiments of the invention.
**Fig. 7B** shows two elements having a socket perforated therethrough configured for receiving the shear bolt of **Fig. 7A****.**
**Fig. 7C** shows the shear bolt of **Fig. 7A** inside the designated socket shown in **Fig. 7B** having the head of the shear bolt being removed by using a hammer.
**Fig. 7D** shows the shear bolt inside the socket having the head of the bolt removed (sheared) therefrom.
**Fig. 8A** shows a permanent fix fastener having a pin portion with a threaded bottom part for allowing permanent fixing thereof, according to other embodiments of the invention.
**Fig. 8B** shows a fastening mechanism using the fastener of **fig. 8A** for connecting two elements having a socket perforated therethrough configured for receiving the fastener of **Fig. 8A****.**
**Fig. 8C** shows the fastener of **Fig. 8A** fully inside the designated socket shown in **Fig. 8B****.**
**Fig. 9** shows a fastening mechanism including a permanent fix fastener, a socket perforated in elements and a multiplicity of stoppers that are configured in material and/or shape for holding the fastener inside the socket for enhancing permanent fixation thereof, according to embodiments of the invention.
**Fig. 10A** shows a permanent fix fastener having a split pin portion, according to one embodiment of the invention.
**Fig. 10B** shows the permanent fix fastener with the split pin portion inside a designated socket perforated between two elements for fastening thereof.
**Fig. 11A** shows a permanent fix fastener having a split pin portion and a separate reinforcing member, according to one embodiment of the invention.
**Fig. 11B** shows the permanent fix fastener of **Fig. 11A** inside the socket, where the reinforcing member is not yet inserted therethrough for reinforcing the hold of the fastener to the walls of the socket.
**Fig. 11C** shows the permanent fix fastener of **Fig. 11A**-**11B** inside the socket, where the reinforcing member is inserted therethrough for reinforcing the hold of the fastener to the walls of the socket by pushing the split edges of the pin portion of the fastener towards the inner socket walls.
**Fig. 12A** shows a tamper proof fastener having a split lower edge, according to another embodiment of the present invention.
**Fig. 12B** is a cross sectional view of the tamper proof fastener of **Fig. 12A** being inserted into a socket perforated in two elements for connecting thereof and a separate reinforcement member for enhancing fastening of the fastener, according to some embodiments of the present invention.
**Fig. 12C** is a cross sectional view of the tamper proof fastener of **Fig. 12A** being inserted into a socket and the reinforcement member inserted therethrough.
**Fig. 13A** is a cross sectional view of a tamper proof fastening mechanism including an elastic guiding member, according to some embodiments of the invention.
**Fig. 13B** is a cross sectional view of the taper proof mechanism of **Fig. 13A** being inserted into a socket in elements for connecting thereof.
**Fig. 14A** is a cross sectional view of a fastening mechanism including a shear bolt fastener having a tubular pin portion, according to some embodiments of the present invention, wherein the fastener is not yet inserted into a designated socket.
**Fig. 14B** is a cross sectional view of the fastener of **Fig. 14A** inside the socket before its head portion is removed.
**Fig. 14C** is a cross sectional view of the fastener of **Fig. 14A** inside the socket after its head portion has been removed.
**Fig. 15A** is a cross sectional view of a fastening mechanism including a collapsing fastener, according to some embodiments of the present invention, wherein the fastener is right after being inserted into a designated socket.
**Fig. 15B** is a cross sectional view of the collapsing fastener of **Fig. 15A** inside the socket in a collapsed position.
**Fig. 16A** is a side view of a shear bolt fastener having a conical shaped pin portion upper part, according to some embodiments of the invention.
**Fig. 16B** is a cross sectional sided view of the shear bolt fastener of **Fig. 16A** having the conical shaped pin portion upper part, inserted into a socket perforated between two elements for allowing the fastener to connect these elements, where the head portion of the fastener is removed (sheared), wherein the conical shape of the pin portion allows filling a space created inside the socket with filling materials.
**Fig. 17A** is a side view of a shear bolt fastener having a conical shaped pin portion upper part and having a coating material coating at least parts of the pin portion thereof, according to other embodiments of the invention.
**Fig. 17B** is a cross sectional sided view of the shear bolt fastener of **Fig. 17A** having the conical shaped pin portion upper part, inserted into a socket perforated between two elements for allowing the fastener to connect these elements, where the head portion of the fastener is removed (sheared), wherein the conical shape of the pin portion allows filling a space created inside the socket with filling materials.
**Fig. 18** is a side view of a shear bolt fastener having a conical shaped pin portion upper part, according to yet another embodiment of the invention.
**Fig. 19** is a side view of a shear bolt fastener having an irregular shape of a pin portion upper part including a protruding section that is located off-center to a main central axis of the fastener, according to another embodiment of the invention.

### DETAILED DESCRIPTION OF THE INVENTION

In the following detailed description of various embodiments, reference is made to the accompanying drawings that form a part thereof, and in which are shown by way of illustration specific embodiments in which the invention may be practiced. It is understood that other embodiments may be utilized and structural changes may be made without departing from the scope of the claims.

The present invention, in some embodiments thereof, provides tamper proof fasteners, fastening mechanisms and fastening methods for using thereof for allowing permanently fixing multiple elements (at least two) to one another. The fasteners, fastening mechanisms and methods provided, allow improving currently used permanent fixes such as prior art shear pins or bolts and the like for improving prevention of disconnecting elements that they are fastened together.

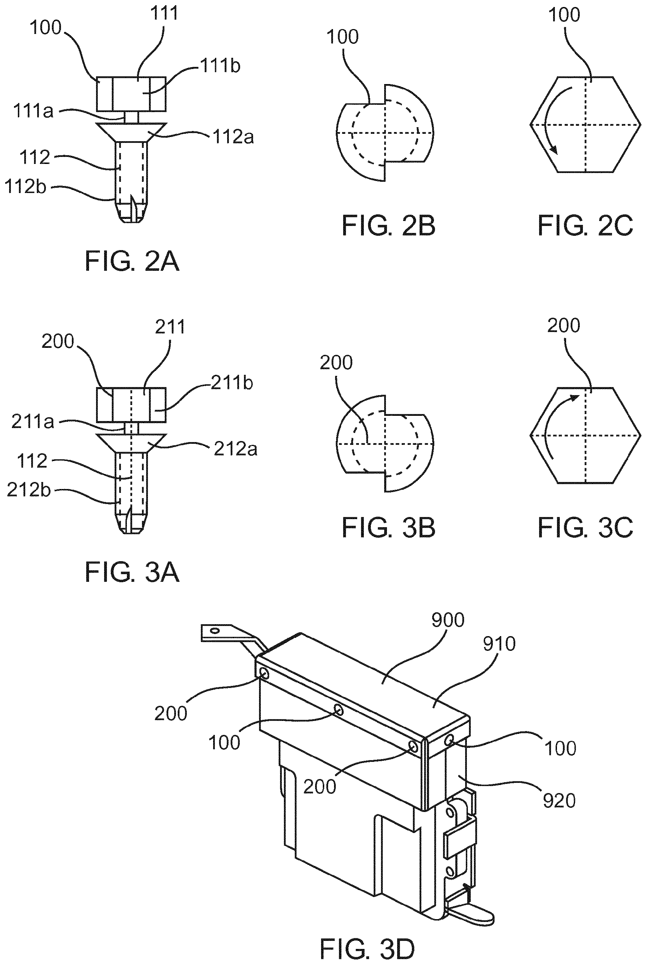

Reference is now made to **Figures 2A- 2C** schematically illustrating a shear bolt fastener **10** that can be fastened (closed) by rotating to a first rotational direction (e.g. counterclockwise), and **Figures 3A- 3C** schematically illustrate another shear bolt fastener designed for rotating to an opposite direction (e.g. clockwise) to that of the bolt illustrated in **Figures 2A-2C****,** for fastening. Each shear bolt **100/200** includes a pin portion **112/212** having a widening part **112a/212a** and a threaded part **112b/212b;** and a bolt head portion **111/211** having a polygonal head part **111a/211a** and a connecting bit **111b/211b,** which may also be polygonal. The head part **111a/211a** can be removed by disconnecting the bit **111b/211b** from the pin portion **112/212** by unscrewing thereof (e.g. by using a corresponding polygonal wrench) or by forcefully hitting it off (e.g. by using a hammer). To fasten each shear bolt **100/200** a polygonal wrench may be used for screwing thereof into a respective female threaded socket in the respective two or more elements that are to be connected. The head part **111b/211b** of each shear bolt **100/200** may include a marking indicating the shear bolt's rotational direction for fastening thereof. A multiplicity of mixed types of shear bolts **100b and b200** may be used for fastening elements to one another for enhancing the permanent fix fastening.

Once the bolt head of the respective shear bolt **111/211** is removed, there is no indication as to the rotational direction for unfastening the respective shear bolt **100/200** and therefore, an unauthorized attempt to open the screwing of the respective shear bolt **100/200** by unscrewing thereof may work for one or more of the shear bolts **100/200** but may damage the tool used for unscrewing when attempting to unscrew the other type of shear bolt **200/100** using the same rotation direction. This may confuse the unauthorized person attempting to tamper with the fastening and convince this person to leave the attempt due to the time it will require him/her for removing the bolts **100/200.**

Reference is now made to **Fig. 3D****,** schematically illustrating a casing **900** for protecting one or more components of a vehicle that includes several elements such as elements **910** and **920** that should be permanently affixed together after the component(s) are encased thereby in a non-removable manner. Shear bolts **100** and **200** are used to fasten the elements **910** and **920,** where the shear bolts **100** and **200** are scattered in no particular order throughout the casing **900.**

**Figures 4A- 4F** schematically illustrate a tamper proof fastener **300** having a hard plate **313** made of hard material(s) such as steel or ceramics according to some embodiments of the invention. The fastener **300** includes a widening head portion **311** and a pin portion **312,** which may be threaded. The pin portion **312** includes a slit **314** for receiving the hard plate **313** therein. The width **"D"** of the hard plate **313** (see **Fig. 4E****)** is slightly larger than the diameter **"d"** of the pin portion **312** and therefore can deform (e.g. bend) once the pin portion **312** is forced/threaded into the socket **23'.** **Fig. 4E** shows the plate **313** inside the pin portion **312** before it was inserted into the socket **23'** and **Fig. 4F** shows how the hard plate **313** can be deformed once inserted into the socket **23'.**

The hard plate **313** prevents the fastener **300** from being pooled out by rotation thereof e.g. by using a rotating tool **31** since the deforming of the protruding plate **313** enhances the grip it has onto the inner walls of the socket **23'** and therefore enhances the fastening of the elements **21'** and **22'** to one another.

As illustrated in **Figures 4B-4D****,** the socket **23'** may be configured to fit the design of the fastener **300** as well as to optimize the fastener's **300** hold of the elements **21'** and **22'** once threaded/inserted into the socket **23'.** In this case, the socket **23'** has three sections: a first section **23a'** having a funnel shape fitting the widening funnel shape of the fastener's head **311;** a second section **23b'** having a tubular shape; and a third section **23c'** which may be threaded as a female thread to receive a male thread section of the pin portion **312** of the fastener **300.**

According to some embodiments of the invention, there is provided a tamper-proof fastener for fastening elements to one another that includes a head portion and a pin portion, where the pin portion includes an expansion mechanism allowing at least part of an outer surface thereof to expand once the pin portion is inserted into a socket perforated through the elements to be fastened to one another. The expansion mechanism may include, for instance a widening lower edge of a pin portion of a fastener of any design such as a regular screw design, a shear bolt design and the like, where the widening edge is made from the same material as the fastener of is an attachment thereto made from softer materials for allowing squeezing into the socket and then widening when inside for applying more pressure over the socket's inner walls for enhancing fastening of the pin portion thereto.

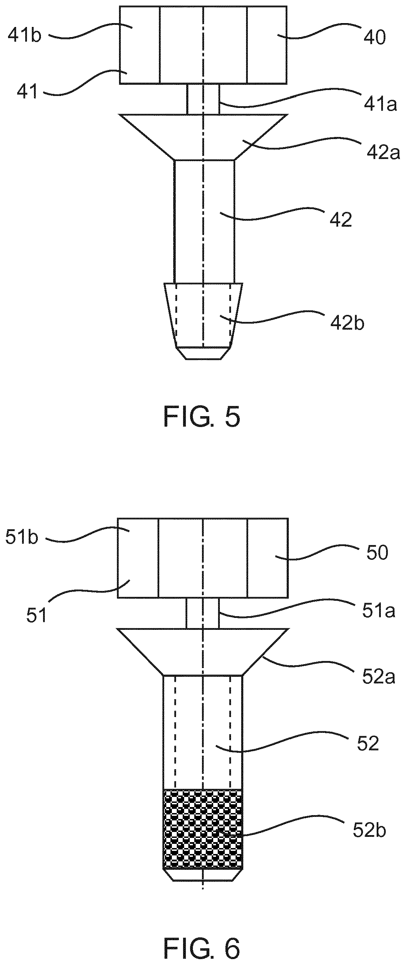

**Fig. 5** shows a shear bolt permanent fix fastener **40** having a head portion **41** with a polygonal had part **41b** and a connecting part **41a** and a pin portion **42** having a pin part **42a** and a widening lower edge by including an attachment **42b,** according to one embodiment of the invention. The attachment **42b** is made from a much flexible and softer material such as rubber, polymeric and/or silicon based flexible materials and the like to improve the hold of this pin portion part to the inner walls of a socket to which it is inserted to fasten elements.

**Fig. 6** shows a shear bolt permanent fix fastener **50** having a head portion **51** with a polygonal had part **51b** and a connecting part **51a;** and a pin portion **52** having a pin part **52a** and a lower edge that has an adhesive attachment **52b,** according to one embodiment of the invention. the adhesive attachment **52b** may simply be an adhesive material attached to the lower edge of the pin portion **52** or a sticker attachment having an adhesive material on both sides thereof to allow both adhering to the pin portion **52** lower edge as well as to the socket inner walls.

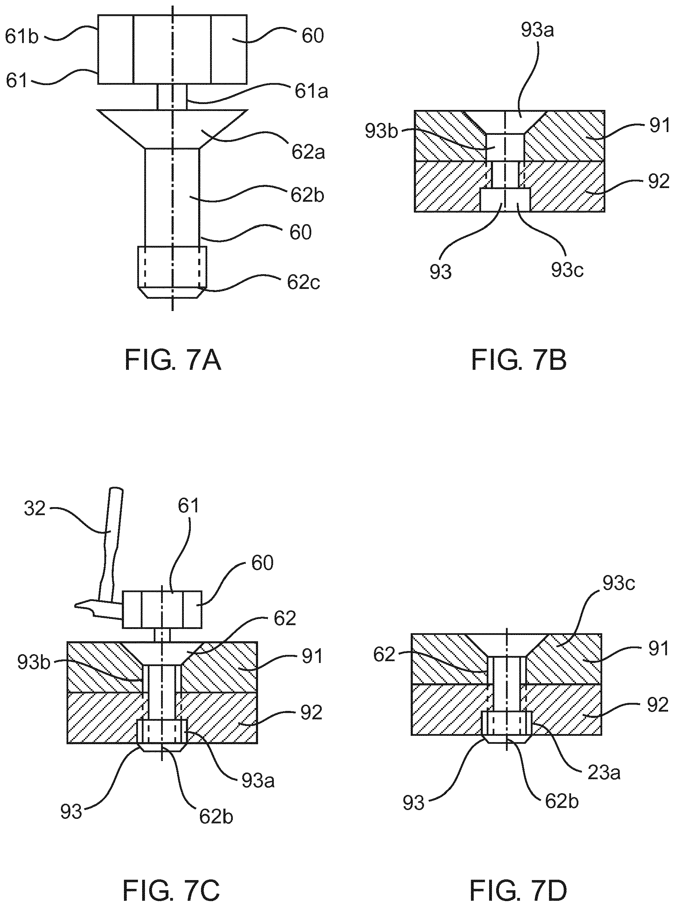

**Fig. 7A-7D** show a fastening mechanism including a tamper proof fastener **60** having a pin portion **62** with a widening threaded bottom part **62c** and a non-threaded middle part **62c** for allowing permanent fixing thereof, according to other embodiments of the invention. The fastener **60** has a shear bolt head portion **61** including a polygonal head part **61b** and a connecting bit **61a;** and the pin portion **62** having a widening upper part **62a** a middle tubular part **62b** and a widening threaded lower part **62c.** The fastening mechanism depends also on the configuration of a designated socket **93** perforated between elements **91** and **92,** where the socket **93** is configured of three sections: an upper first section **93a** configured to receive and hold the funnel shaped upper part **62a** of the pin portion **62;** a second section **93b** having a threaded part for receiving the screw thread of the lower part **62c** of the pin portion **62** on its way through the socket **93;** and a non-threaded third section **93.** The treaded lower part **62b** of the pin portion **62** is threaded through the threaded portion of the second section **93b** of the socket **93** when fastened therethrough and then further inserted and designed to completely be inserted into the non-threaded third section **93c.** In this way, once the fastener **60** is fully inserted into the socket **93** for connecting the elements **91** and **92,** the male-screw threaded portion thereof is not in the female-screw threaded portion of the socket **93** enhancing tamper proof characteristics of the fastening mechanism since it prevents the fastener **60** from being unscrewed from the socket **93.** Since in this example, the fastener **60** is a shear bolt, the head portion **61** thereof can be removed by using a tool **32** such as a hammer, a wrench or a screwdriver for removing thereof to further enhance tamper proof characteristics of the fastening mechanism.

Other types of fasteners may be used for this mechanism that are not necessarily shear bolt based by can also be standard screws having only a very limited lower threaded portion, where the design of the socket corresponds to the pin portion threaded edge length to allow fastener unscrewing/removal prevention.

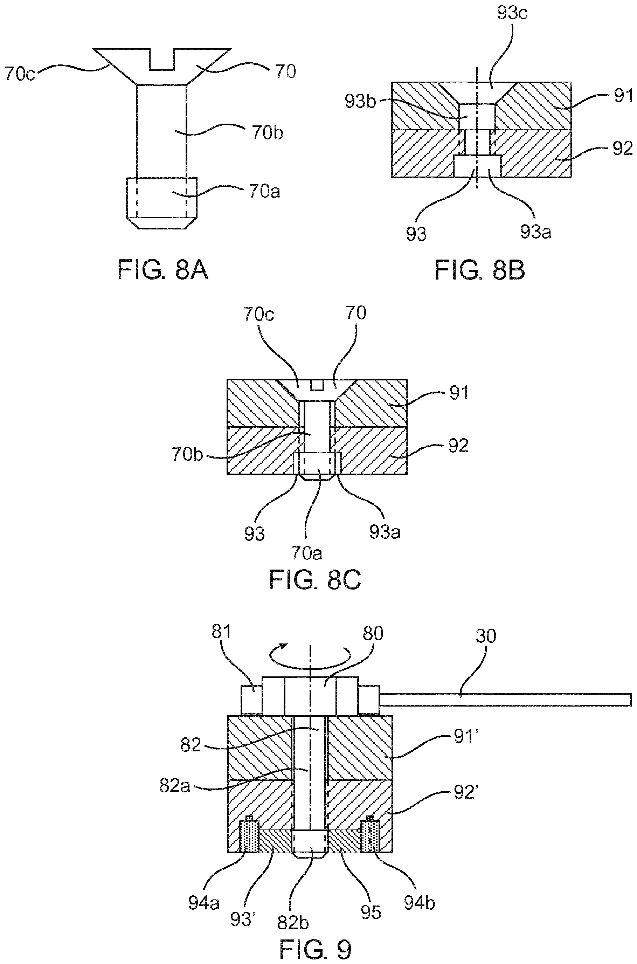

**Fig. 8A-8C** show a permanent fix fastener **70** having a head portion **70c** a threaded pin portion **70a** and a non-threaded pin portion **70b** for allowing permanent fixing thereof, according to other embodiments of the invention. Similarly to the fastening mechanism described in respect to **Figures 8A-8C****,** tis fastener **70** does not include the shear bolt head design and also requires the same socket **93** configuration.

**Fig. 9** shows a fastening mechanism including; (i) a permanent fix shear bolt fastener **80** having a head portion **81** and a pin portion **82;** (ii) a rotating nut **95** fastened to the fastener's 80 threaded lower part **82b;** (iii) and a socket **93'** perforated in elements **91'** and **b92'** and a multiplicity of stoppers such as stoppers **94a** and **94b** that are made from material and/or shape designated for improving the hold of the fastener **80** to the inner walls of the socket **93'** for enhancing permanent fixation thereof, according to embodiments of the invention. The fastener **80** pin portion **82** includes a tubular non-threaded part **82a** and a threaded part **82b,** which is screwed to the nut **95.** The stoppers **94a** and **94b** are located inside the socket **93'** or may be attached to the nut **95.** When the fastener **80** (attached to the nut **95**) is rotated (e.g. by a polygonal wrench **30)** to be inserted into the socket **93',** the stoppers **94a** and **94b,** made of resilient, flexible and/or soft materials such as rubber, polymeric/silicon based elastic materials and the like, widen and deform and/or adhere to the nut **95** thereby improving and enhancing the attachment between the fastener **80** and the elements **91'** and **92'** via the socket **93'** perforated therethrough.

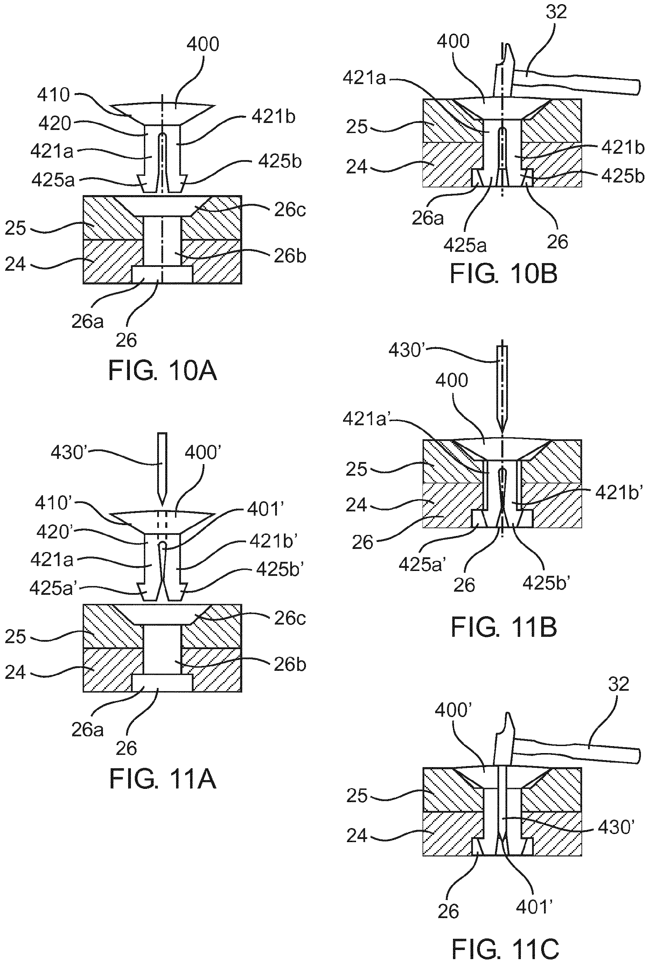

**Fig. 10A-10B** show a permanent fix fastener **400** having a split pin portion **420** and a mechanism utilizing thereof, according to one embodiment of the invention.

According to these embodiments, the fastener **400** includes a head portion **410** and the pin portion **420,** where the pin portion **420** includes multiple pins such as pins **421a** and **421b.** The split edge serves as a spring that allows contracting the pin portion **420** for inserting thereof into a socket **26** perforated through elements **24** and **25** for connecting thereof, and then applying pressure outwardly towards the inner walls of the socket **26b** due to their design for enhancing the grip of the pin portion **420** onto the elements **24** and **25** for enhancing fastening characteristics of the mechanism.

As illustrated in **fig. 10A**, the socket **26** includes: a widening lower section **26a;** a second tubular section **26b** and a third widening funnel shaped section **26c.** Additionally, as illustrated in **Figures 10A-10B****,** each pin **421a/421b** includes a protruding edge **425a/425b** respectively, for being inserted into the designated widening space **26a** in the socket **26.**

**Figures 11A-11C** illustrate a fastener **400'** and fastening mechanism that is very similar to fastener **400** and fastening mechanism described in **Figures 10A-10B**. these embodiments of the present invention, include a mechanism that uses the fastener **400'** having a head portion **410'** and a split pin portion **420',** where the split portion **420'** includes pins **421a'** and **421b'** each having a protrusion **425a'** and **452b'** respectively. The socket **26** is designed in the same manner as described in relation to **Figures 10A-10B****.** The only difference is that the fastener **400'** also includes a channel **401** located along a coaxial axis of the fastener **400'** for receiving a reinforcement member **430'** therethrough once the fastener **400'** is fully inserted in the socket **26.** The reinforcement member **430'** allows further pushing the pins **421a'** and **421b'** towards the walls of the socket **26** for enhancing the grip of the fastener **400'** thereto.

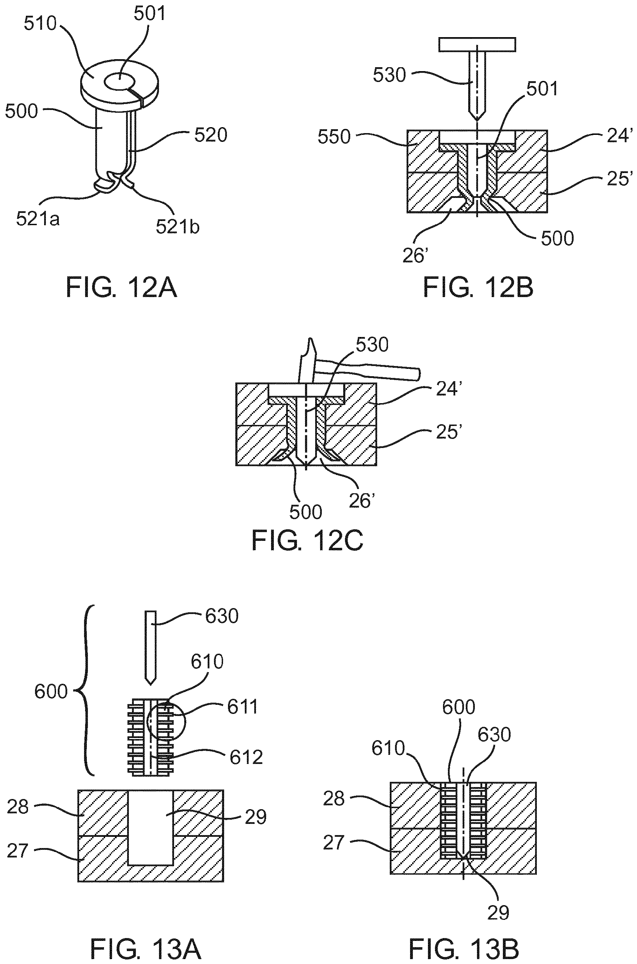

**Fig. 12A** shows a tamper proof fastener **500** having a head portion **510;** and a split lower edge of its respective pin portion **520** including protrusions **521a** and **521b,** according to another embodiment of the present invention.

**Fig. 12B-12C** show the tamper proof fastener **500** being inserted into a socket **26'** perforated in two elements **24'** and **25'** for connecting thereof and a separate reinforcement member **530** for enhancing fastening of the fastener **500,** according to some embodiments of the present invention. the fastener **500** includes a hollowed channel **501** along its main vertical axis into which a lower rod like part of the reinforcement member **530** is to be inserted. The reinforcement member **530** has a diameter that is close to the diameter aperture of the channel 501 for allowing thereof to apply pressure over the inner walls of the channel **501** towards the inner walls of the socket **26'** for enhancing the fastening of the fastener **500** to the elements **24'** and **25'.**

**Figures 13A-13B** show a tamper proof fastening mechanism including a spring pin fastener **600** having an elastic guiding member **610** and a reinforcement member **630,** according to some embodiments of the invention. The guiding member **610** has an elongated channel **612** for receiving the reinforcement member **630** therein once the guiding member **610** is inside a designated socket **29** of elements **27** and **28** that are to be connected thereby. To enhance fastening characteristics, the outward surface of the guiding member **610** includes an elastic cover (e.g. made of elastic materials such as rubber, polymeric/silicon based elastic solids and the like) and optionally has a non-uniform surface such as a wiggly or wrinkly surface made of elastic materials that can be squeezed (compressed) for entering the socket **29** that may have a smaller diameter than that of the fastener **600** and then naturally decompress and thereby apply force outwardly over the inner walls of the socket **29** for improving hold of the fastener **600** to the socket walls **29.** The reinforcement member **630** may further enhance those very same qualities.

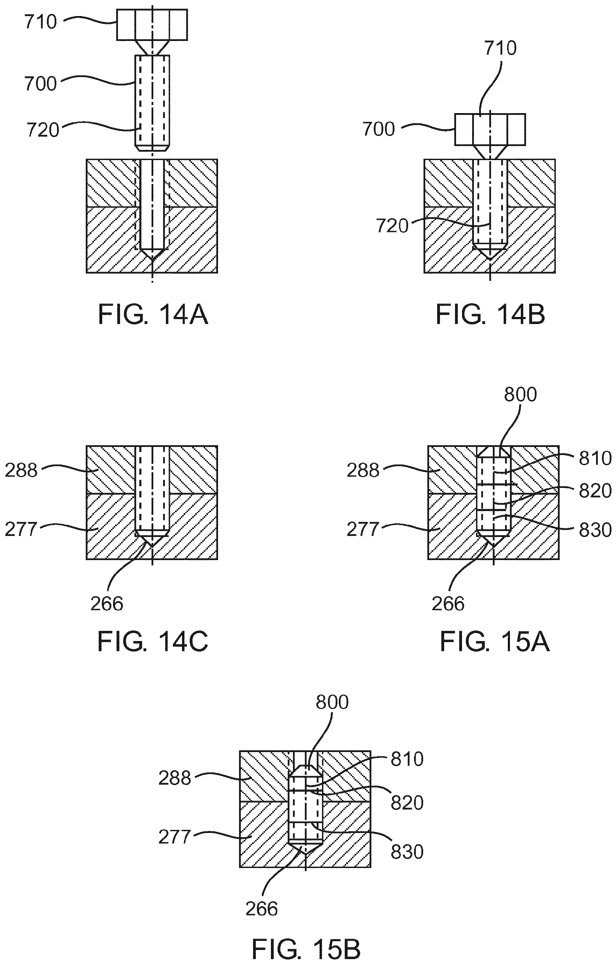

**Figures 14A-14C** show a fastening mechanism including a shear bolt fastener **700** having a head portion **710** and a tubular pin portion **720,** according to some embodiments of the present invention. The socket **266** perforated through elements **277** and **288** into which the fastener **700** is configured to receive the tubular pin portion **720** such that the surface of the pin portion will not protrude from the element **288.**

**Figures 15A-15B** show a fastening mechanism including a collapsing fastener **800,** according to some embodiments of the present invention. The collapsing fastener **800** may have multiple sections **810, 820** and **830** that can telescopically connect to each other for collapsing and thereby shortening the length of the fastener **800** once inside the socket **266.**

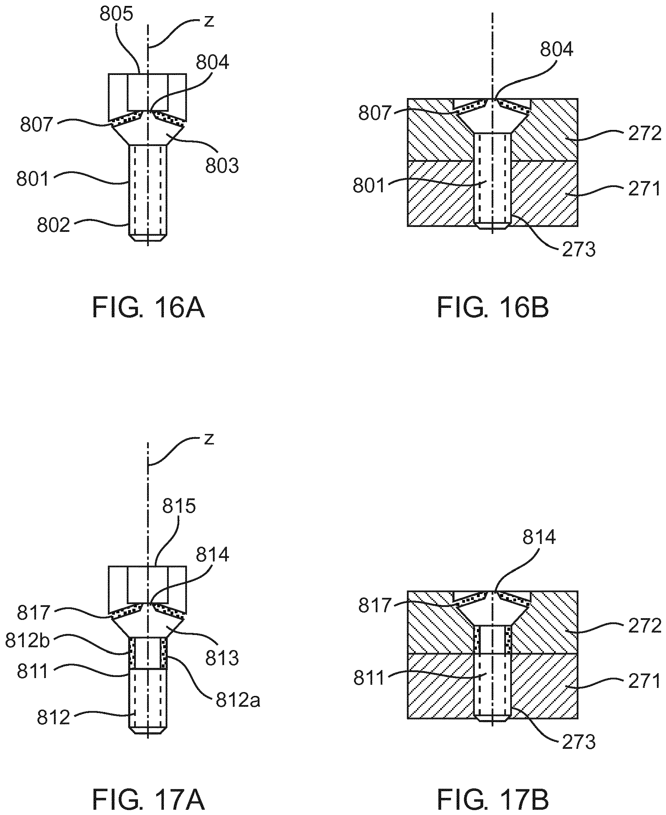

**Figures 16A-16B** illustrate a shear bolt fastener **801,** according to some embodiments of the invention. The shear bolt fastener **801** includes a head portion **805** and a pin portion **802,** where the pin portion **802** includes a pin and a conical upper part **803** creating a shape of a protrusion **804** at the upper edge thereof. The protrusion **804** connects to the head portion **805** before the head portion **805** is removed. The head portion **805** has a corresponding receiving shape that is conical to fit the upper part **803** of the pin portion **802** such that they create a space **807** between the lower part of the head portion **805** and the upper part **803** of the pin portion **802.** The space **807** can be filled with materials that enhance fastening or proof tamper prevention characteristics of the mechanism such as plastic, adhesive and/or ceramic materials or steel that are much harder than the material from which the fastener is made (such as aluminum) for deforming a drill/screwdriver bit on attempt to rotate the fastener **801** once affixed to the elements **271** and **272;** or other materials that can create smoke upon friction with a tool used for rotation of the pin portion **802.**

**Figures 17A -17B** show a similar fastening mechanism and fastener **811** to the fastener **801** described in **Figures 16A-16B** having the same shape of a shear bolt head portion **815;** and pin portion **812** having a similar conical upper part **813** and protrusion **814** creating similar space **817** therebetween. This fastener **811,** however, also includes one or more coated areas **812a** and **812b** that include the same materials as filled in space **817** such as ceramic, adhesive and/or plastic materials.

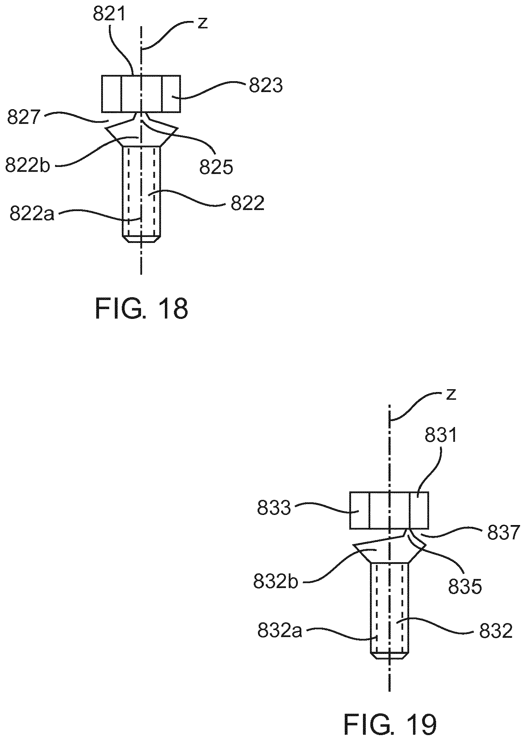

**Fig. 18** shows a shear bolt fastener **821** having a head portion **825** and a pin portion **822** having a conical shaped upper part **823,** according to yet another embodiment of the invention. In this embodiment, the head portion **825** does not have a compatible conical receiving shape as in embodiments illustrated in **Figures 15A-15B****.** The conical shape creates a protrusion 824 and a space 827 between the head portion 825 and the upper part **823.** In this embodiment the protrusion **825** is located centrally in respect to a main vertical axis **"z"** of the fastener **821.**

**Fig. 19** shows a shear bolt fastener **831** having a head portion b835 and a pin portion **832,** where the pin portion **832** includes an upper part **833** having an irregular shape creating an off-centered protrusion **834** in respect to a main vertical axis **"z"** of the fastener **831.**

Many alterations and modifications may be made by those having ordinary skill in the art without departing from the scope of the claims. Therefore, it must be understood that the illustrated embodiment has been set forth only for the purposes of example and that it should not be taken as limiting the invention as defined by the following invention and its various embodiments.

Therefore, it must be understood that the illustrated embodiment has been set forth only for the purposes of example and that it should not be taken as limiting the invention as defined by the following claims. For example, notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention.

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a sub-combination or variation of a sub-combination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptually equivalent, what can be obviously substituted and also what essentially incorporates the essential idea of the invention.

Although the invention has been described in detail, nevertheless changes and modifications, which do not depart from the teachings of the present invention, will be evident to those skilled in the art. Such changes and modifications are deemed to come within the purview of the appended claims.

## Claims

1. A safety mechanism comprising:
a) at least two elements (910, 920) having a plurality of sockets perforated thereover, each of said sockets is perforated through said at least two elements for receiving a fastener portion therein for connecting said elements to one another;
b) a plurality of fasteners (100, 200) each having a threaded portion (112, 212) and a head portion (111, 112) that allows using a rotating tool for fastening said fastener by rotating thereof to a predefined direction and removing thereof by rotating it to an opposite rotating direction, said plurality of fasteners (100, 200) comprise at least one fastener (100) of a first type and at least one fastener (200) of a second type,
wherein said first type fastener (100) is configured to fasten said elements by rotating it to a first rotation direction and removing thereof by rotating it to a second rotating direction opposite to the first rotation direction, and
wherein said second type fastener (200) is configured to fasten said elements by rotating it to the second rotation direction and removing thereof by rotating it to the first rotating direction opposite thereto,
wherein each of the plurality of fasteners (100, 200) regardless of its particular type is designed to appear the same from at least one side thereof that is configured for being exposed to a viewer once the respective fastener is secured to said elements (910, 920) for preventing a respective viewer from visually distinguishing the type and therefore the rotation direction of each respective fastener.

2. The safety mechanism according to claim 1, wherein each said fastener (100, 200) is a shear bolt having a pin portion and a head portion connected to said pin portion, said head portion is configured for allowing said fastening mechanism to connect said at least two elements to one another by using a designated fastening tool and for being sheared off from said pin portion once said pin portion is inserted to a respective socket perforated through said at least two elements for connecting thereof.

3. The safety mechanism according to claim 1, wherein said plurality of elements (910, 920) form a casing (900) for at least one vital component of a vehicle when fastened to one another using said plurality of fasteners, encasing said at least one vital component therein.

## Patentansprüche

1. Sicherheitsmechanismus, umfassend:
a) mindestens zwei Elemente (910, 920) mit einer Vielzahl von über diese gelochten Fassungen, wobei jede der Fassungen durch die mindestens zwei Elemente gelocht wird, um darin ein Befestigungsteil zum gegenseitigen Verbinden der Elemente aufzunehmen;
b) eine Vielzahl von Befestigungselementen (100, 200) jeweils mit einem Gewindeabschnitt (112, 212) und einem Kopfabschnitt (111, 112), der die Verwendung eines Drehwerkzeugs zum Befestigen des Befestigungselements erlaubt, indem dasselbe in eine vorbestimmte Richtung gedreht wird, und zum Entfernen desselben, indem es in eine entgegengesetzte Drehrichtung gedreht wird, wobei die Vielzahl von Befestigungselementen (100, 200) mindestens ein Befestigungselement (100) eines ersten Typs und mindestens ein Befestigungselement (200) eines zweiten Typs aufweisen,
wobei das Befestigungselement (100) des ersten Typs gestaltet ist, die Elemente zu befestigen, indem es in eine erste Drehrichtung gedreht wird, und dasselbe entfernt wird, indem es in eine zweite Drehrichtung, der ersten Drehrichtung entgegengesetzt, gedreht wird; und
wobei das Befestigungselement (200) des zweiten Typs gestaltet ist, die Elemente zu befestigen, indem es in die zweite Drehrichtung gedreht wird, und dasselbe entfernt wird, indem es in die erste Drehrichtung entgegengesetzt dazu gedreht wird,
wobei jedes der Vielzahl von Befestigungselementen (100, 200) ohne Rücksicht auf seinen speziellen Typ so ausgeführt ist, dass es gleich aussieht von mindestens einer Seite desselben, die so gestaltet ist, dass sie für einen Betrachter unverdeckt ist, sobald das jeweilige Befestigungselement an den Elementen (910, 920) gesichert ist, um zu verhindern, dass ein jeweiliger Betrachter visuell den Typ und daher die Drehrichtung jedes entsprechenden Befestigungselements unterscheidet.

2. Sicherheitsmechanismus nach Anspruch 1, wobei jedes Befestigungselement (100, 200) ein Scherbolzen ist mit einem Stiftabschnitt und einem mit dem Stiftabschnitt verbundenen Kopfabschnitt, wobei der Kopfabschnitt so gestaltet ist, dass der Befestigungsmechanismus die mindestens zwei Elemente aneinander befestigen kann, indem ein bestimmtes Befestigungswerkzeug verwendet wird und damit es von dem Stiftabschnitt abgeschert wird, sobald der Stiftabschnitt in eine jeweilige, durch die mindestens zwei Elemente zur Verbindung derselben durchlochten Fassung eingesetzt wird.

3. Sicherheitsmechanismus nach Anspruch 1, wobei die Vielzahl von Elementen (910, 920) ein Gehäuse (900) für mindestens ein wichtiges Bauteil eines Fahrzeugs bilden, wenn sie unter Verwendung der Vielzahl von Befestigungselementen aneinander befestigt werden, indem das mindestens eine wichtige Bauteil darin umschlossen wird.

## Revendications

1. Mécanisme de sécurité comprenant :
a) au moins deux éléments (910, 920) ayant une pluralité de cavités perforées sur ceux-ci, chacune desdites cavités est percée à travers lesdits au moins deux éléments pour recevoir une portion de fixation à l'intérieur pour connecter lesdits éléments entre eux ;
b) une pluralité de fixations (100, 200) ayant chacune une portion filetée (112, 212) et une portion de tête (111, 112) qui permet l'utilisation d'un outil rotatif pour le blocage de ladite fixation par rotation de celle-ci dans une direction de rotation prédéfinie et l'enlèvement de celle-ci en la tournant dans une direction de rotation opposée, ladite pluralité de fixations (100, 200) comprend au moins une fixation (100) d'un premier type et au moins une fixation (200) d'un deuxième type,
dans lequel ladite fixation du premier type (100) est configurée pour fixer lesdits éléments en la tournant dans une première direction de rotation et son enlèvement en la tournant dans une deuxième direction de rotation opposée à la première direction de rotation, et
dans lequel ladite fixation du deuxième type (200) est configurée pour fixer lesdits éléments en la tournant dans la deuxième direction de rotation et son enlèvement en la tournant dans la première direction de rotation opposée à celle-ci,
dans lequel chacune de la pluralité de fixations (100, 200), indépendamment de son type particulier, est conçue pour apparaître identique à partir d'au moins un côté de celle-ci qui est configuré pour être exposé à un observateur une fois que la fixation respective est bloquée avec lesdits éléments (910, 920) pour empêcher un observateur respectif de distinguer visuellement le type et par conséquent la direction de rotation de chaque fixation respective.

2. Mécanisme de sécurité selon la revendication 1, dans lequel chaque dite fixation (100, 200) est un boulon de cisaillement ayant une portion de tige et une portion de tête connectée à ladite portion de tige, ladite portion de tête est configurée pour permettre audit mécanisme de fixation de connecter lesdits au moins deux éléments l'un à l'autre en utilisant l'outil de fixation désigné et pour être cisaillée par rapport à ladite portion de tige une fois que ladite portion de tige est insérée dans une cavité respective percée à travers lesdits au moins deux éléments pour leur connexion.

3. Mécanisme de sécurité selon la revendication 1, dans lequel ladite pluralité d'éléments (910, 920) forment un boîtier (900) pour au moins un composant essentiel d'un véhicule quand ils sont fixés l'un à l'autre en utilisant ladite pluralité de fixations, enfermant ledit au moins composant essentiel à l'intérieur.
